# EUROPEAN PATENT SPECIFICATION

(11) **EP 1 281 540 B1**
(45) Date of publication and mention of the grant of the patent: **12.04.2006**
(21) Application number: 02016271.5
(22) Date of filing: 23.07.2002
(51) Int. Cl.: B60B 1/00, B60B 1/04

(54) **An anti-friction bearing interposable at the crossing-over point between two spokes of a bicycle wheel**
Reibungsloses Lager montiert wo zwei Speichen eines Fahrradrads einander kreuzen
Palier anti-friction placé à l'endroit où deux rayons de bicyclette se croisent

(30) Priority: 03.08.2001 IT TO20010783
(43) Date of publication of application: 05.02.2003
(73) Proprietor: CAMPAGNOLO S.R.L., I-36100 Vicenza (IT)
(72) Inventor: Passarotto, Maurizio, 45100 Rovigo (IT)
(74) Representative: Castiglia, Paolo

(56) References cited:
- EP-A- 1 031 502
- EP-A- 1 043 177
- WO-A-97/46072
- DE-A- 3 226 357
- US-A- 3 879 089
- US-A- 3 995 938

## Description

The present invention relates to the field of spoked bicycle wheels and regards an anti-friction bearing interposable at the crossing-over point between two spokes of a bicycle wheel.

There have already been proposed for some time spoked bicycle wheels, in which at the crossing-over point of at least one pair of spokes there is set a support. One solution of this type is, for example, known from the German patent application DE-A-3 226 357, published on January 19, 1984. The body set at the crossing-over point between two spokes has normally been used in the past for supporting, for instance, a permanent magnet designed to co-operate with a sensor carried by the fork of the bicycle for detecting the speed of rotation of the wheel. Another support of the type presented above is described in EP-A-1 031 502.

The above-mentioned support envisages a body provided with a groove, designed to fit, by snap action, on a spoke. The fitting of a grooved body on the spoke of a bicycle wheel is, on the other hand, well-known in the prior art (see, for example, the German patent DE-C-0 582 991, published on August 10, 1933). A further solution of a body provided with two grooves on two opposite faces for mounting between two spokes in the area in which they cross over one another is known from EP-A-1 043 177, disclosing the features of the preamble of claim 1.

The purpose of the present invention is to provide a bearing that can be set between two spokes of a bicycle wheel in the point where they cross over one another, which has a simple structure and is inexpensive, and which will provide a better guarantee of stability of its anchorage as compared to the solutions of the known art.

With a view to achieving the above purpose, the subject of the invention is a bearing of the type described above, characterized in that it comprises a body having a through hole, with a completely closed continuous wall giving out on two opposite ends of the body to receive through it one of the aforesaid two spokes, said body having an external-surface portion designed to come into contact with the other spoke.

As compared to the known solutions described above, the bearing according to the invention presents the difference of having to be fitted over the respective spoke starting from one end of the latter, in so far as the spoke must be made to pass through the aforesaid hole. Consequently, the bearing must be pre-set on the spoke before the spoke is completely mounted on the wheel. This drawback in the installation phase is, however, largely compensated for by the fact that the possibility of separation of the bearing from the respective spoke is totally excluded, unlike the known solutions mentioned above, which envisage snap-action fitting of the spoke inside the respective groove of the bearing.

Theoretically, the bearing according to the present invention could be made in the form of a tubular element, fitted on one of the two spokes and having an external surface in contact with the other spoke.

In the preferred embodiment of the present invention, however, the aforesaid external-surface portion, which is in contact with the second spoke, is defined by a groove having a longitudinal direction inclined with respect to the axis of the aforesaid through hole by an angle corresponding to the angle at which the two spokes cross one another.

Preferably, the aforesaid bearing is made of plastic or elastomeric material. It can thus function as an anti-friction and anti-noise material, so preventing direct rubbing between the two spokes, which may occur as the bicycle is travelling.

Of course, subject of the present invention is also a spoked wheel comprising a plurality of pairs of spokes that cross one another and a bearing of the type described above set at the point of crossing-over of one or more pairs of spokes.

Further characteristics and advantages of the present invention will emerge from the ensuing description, with reference to the attached drawings, which are provided purely by way of non-limiting example, and in which:
- Figure 1 is a front view of an example of embodiment of a wheel according to the invention;
- Figure 2 is a perspective view at an enlarged scale of the bearing according to the invention in the condition where it is mounted between two spokes;
- Figure 3 is a further perspective view of the bearing illustrated in Figure 2; and
- Figure 4 is a further perspective view at a further enlarged scale of the bearing according to the invention.

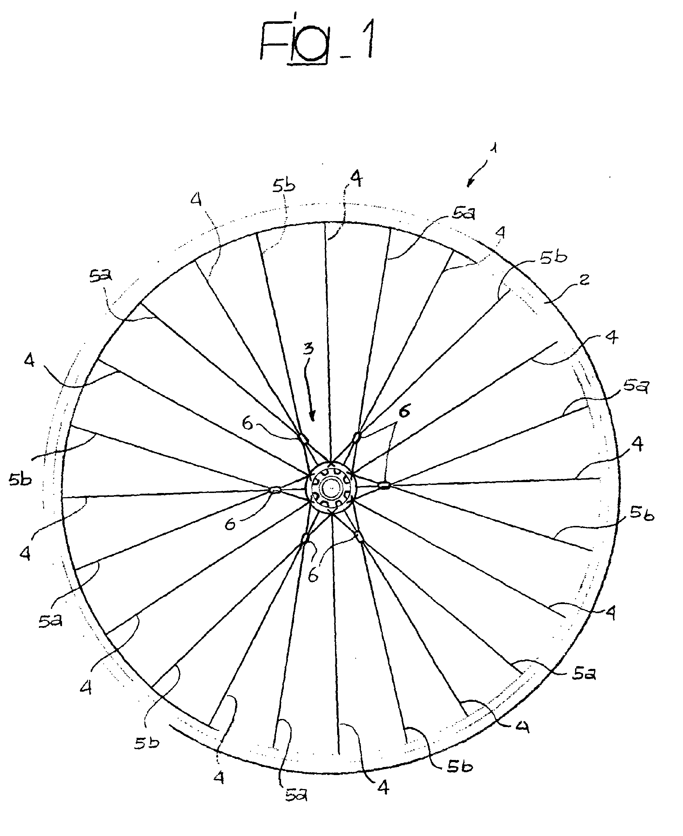

In Figure 1, the reference number 1 designates as a whole a spoked bicycle wheel comprising a rim 2 connected to a hub 3 by means of a plurality of spokes. In particular, the example illustrated shows a wheel having a plurality of spokes 4 in a radial direction and, on the other side, pairs of spokes 5a, 5b, which cross one another.

Set in the area in which the spokes cross, between each pair of spokes 5a, 5b, is a bearing 6.

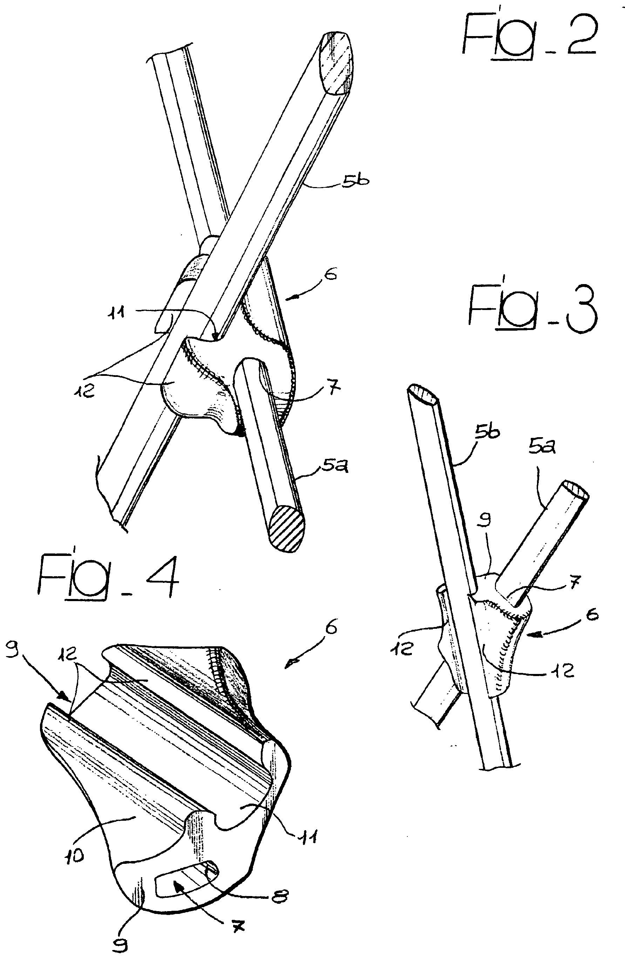

As may be seen in Figures 2 to 4, the bearing 6 is a body made of a single piece, preferably made of plastic or elastomeric material, for example rubber, comprising a through hole 7, with a section completely closed by a continuous wall 8 giving out onto two opposite faces 9 (only one face is visible in the figure). In the example illustrated, the spokes 5a, 5b have a flattened section, which is basically ellipsoidal. Consequently, the through hole 7 has a profile of similar cross section.

In addition, once again in the case of the preferred embodiment of the invention, the body 6 has an external-surface portion 10, in which there is formed a groove 11, delimited by two elastically deformable ribs (12), to enable snap-action mounting of the spoke 5b within the groove 11. Also the groove 11 has a profile corresponding to the profile of the spoke 5b. It is evident, however, that for the purposes of the present invention, the presence of the groove 11 is not essential, it being possible for the body 6 to have a surface portion 10 without groove simply in contact with the spoke 5b. In the case of the embodiment illustrated, the groove 11 has a longitudinal direction inclined with respect to the axis of the through hole 7 by an angle corresponding to the angle at which the two spokes 5a, 5b cross over one another, as is clearly visible in Figure 3.

For mounting of the bearing according to the invention, it is necessary to slide the body 6 over one end of a spoke 5a before the latter is mounted on the wheel. The bearing 6 can then be made to slide along the spoke 5a until it is set in the area where the spoke 5a crosses over the respective spoke 5b.

As the bicycle is travelling, the body 6 functions as an anti-friction and anti-noise element. Its anchorage to the spoke 5a is completely ensured.

Of course, without prejudice to the principle of the invention, the details of construction and the embodiments may vary widely with respect to what is described and illustrated purely by way of example, without thereby departing from the scope of the present invention, as defined in the claims.

For example, the side wall 8 of the trough hole 7 does not need to be continuously closed for its entire length. Said wall 8 could present one or more apertures in its length or present a closed section only on a small part of its length, the essential characteristic of the invention being the fact that such a wall 8 presents a closed section for at least a part of its length.

## Claims

1. An anti-friction bearing interposable at the crossing-over point between two spokes (5a, 5b) of a bicycle wheel, **characterized in that** it comprises a body (6) having a through hole (7), with a closed section for at least a part of the length of its side wall (8), and giving out onto two opposite ends (9) of the body (6) to receive through it one (5a) of the two spokes, said body (6) having a portion of external surface (10) defining a contacting surface with the other spoke (5b), said contacting surface having a longitudinal direction inclined with respect to the axis of the aforesaid through hole (7) by an angle corresponding to the angle at which the two spokes (5a, 5b) cross over one another.

2. The bearing according to Claim 1, **characterized in that** the aforesaid body (6) is made of a plastic and/or elastomeric material.

3. The bearing according to Claim 1, **characterized in that** said contacting surface is defined in a groove (11).

4. The bearing according to Claim 3, **characterized in that** the aforesaid groove (11) is delimited by two elastically deformable ribs (12), for snap-action mounting of the spoke (5b) within the groove (11).

5. The bearing according to Claim 1, **characterized in that** the aforesaid through hole (7) has a section with a profile corresponding to the section of the respective spoke (5a) .

6. The bearing according to Claim 5, **characterized in that** the aforesaid profile of section is basically ellipsoidal.

7. The bearing according to Claim 5, **characterized in that** the aforesaid profile of section is basically cylindrical.

8. The bearing according to Claim 1, **characterized in that** the aforesaid through hole (7) presents a continuous closed section for substantially the entire length of its wall (8).

9. A spoked bicycle wheel, comprising a hub (3) and a rim (2) connected by a plurality of spokes (5a, 5b), said plurality of spokes including a plurality of pairs of spokes (5a, 5b) crossing one another, **characterized in that** mounted at the crossing-over point of one or more of the aforesaid pairs of spokes (5a, 5b) is a bearing according to one or more of the preceding claims.

## Patentansprüche

1. Reibungsminderndes Lager, das an dem Überschneidungspunkt zwischen zwei Speichen (5, 5b) eines Fahrradrades angeordnet werden kann, **dadurch gekennzeichnet, dass** es einen Körper (6) umfasst, der ein Durchgangsloch (7) mit einem geschlossenen Abschnitt über wenigstens einen Teil der Länge seiner Seitenwand (8) aufweist, das sich zu zwei gegenüberliegenden Enden (9) des Körpers (6) hin öffnet, um darüber eine (5a) der zwei Speichen aufzunehmen, wobei ein Teil der Außenfläche (10) des Körpers (6) eine Kontaktfläche mit der anderen Speiche (5b) bildet und die Kontaktfläche eine Längsrichtung hat, die in Bezug auf die Achse des Durchgangslochs (7) um einen Winkel geneigt ist, der dem Winkel entspricht, in dem die zwei Speichen (5a, 5b) einander überschneiden.

2. Lager nach Anspruch 1, **dadurch gekennzeichnet, dass** der Körper (6) aus einem Kunststoff- und/oder Elastomermaterial besteht.

3. Lager nach Anspruch 1, **dadurch gekennzeichnet, dass** die Kontaktfläche in einer Nut (11) ausgebildet ist.

4. Lager nach Anspruch 3, **dadurch gekennzeichnet, dass** die Nut (11) durch zwei elastische verformbare Rippen (12) zum einschnappenden Anbringen der Speiche (5b) in der Nut (11) begrenzt wird.

5. Lager nach Anspruch 1, **dadurch gekennzeichnet, dass** das Durchgangsloch (7) einen Querschnitt mit einem Profil hat, das dem Querschnitt der jeweiligen Speiche (5a) entspricht.

6. Lager nach Anspruch 5, **dadurch gekennzeichnet, dass** das Querschnittsprofil im Wesentlichen elliptisch ist.

7. Lager nach Anspruch 5, **dadurch gekennzeichnet, dass** das Querschnittsprofil im Wesentlichen zylindrisch ist.

8. Lager nach Anspruch 1, **dadurch gekennzeichnet, dass** das Durchgangsloch (7) einen durchgehenden geschlossenen Querschnitt über im Wesentlichen die gesamte Länge seiner Wand (8) aufweist.

9. Mit Speichen versehenes Fahrradrad, das eine Nabe (3) und eine Felge (2) umfasst, die durch eine Vielzahl von Speichen (5a, 5b) verbunden sind, wobei die Vielzahl von Speichen eine Vielzahl von Paaren von Speichen (5a, 5b) enthält, die einander überschneiden, **dadurch gekennzeichnet, dass** sich an dem Überschneidungspunkt eines oder mehrerer der Paare von Speichen (5a, 5b) ein Lager nach einem oder mehreren der vorangehenden Ansprüche befindet.

## Revendications

1. Palier anti-frottement pouvant s'intercaler au point de croisement entre deux rayons (5a, 5b) d'une roue de bicyclette, **caractérisé en ce qu'**il comprend un corps (6) comportant un trou traversant (7), présentant une section fermée sur au moins une partie de la longueur de sa paroi latérale (8), et débouchant sur deux extrémités opposées (9) du corps (6) afin de recevoir en son travers l'un (5a) des deux rayons, ledit corps (6) comportant une partie de surface externe (10) définissant une surface de contact avec l'autre rayon (5b), ladite surface de contact comportant une direction longitudinale inclinée par rapport à l'axe dudit trou traversant (7) d'un angle correspondant à l'angle auquel les deux rayons (5a, 5b) se croisent l'un sur l'autre.

2. Palier selon la revendication 1, **caractérisé en ce que** ledit corps (6) est constitué d'un matériau plastique et/ou élastomère.

3. Palier selon la revendication 1, **caractérisé en ce que** ladite surface de contact est définie dans une rainure (11).

4. Palier selon la revendication 3, **caractérisé en ce que** ladite rainure (11) est délimitée par deux nervures (12) déformables de manière élastique en vue d'un montage du rayon (5b) à l'intérieur de la rainure (11) par une action d'encliquetage.

5. Palier selon la revendication 1, **caractérisé en ce que** ledit trou traversant (7) présente une section avec un profil correspondant à la section du rayon respectif (5a).

6. Palier selon la revendication 5, **caractérisé en ce que** ledit profil de section est globalement ellipsoïdal.

7. Palier selon la revendication 5, **caractérisé en ce que** ledit profil de section est globalement cylindrique.

8. Palier selon la revendication 1, **caractérisé en ce que** ledit trou traversant (7) présente une section fermée continue sur pratiquement toute la longueur de sa paroi (8).

9. Roue de bicyclette à rayons, comprenant un moyeu (3) et une jante (2) reliés par une pluralité de rayons (5a, 5b), ladite pluralité de rayons incluant une pluralité de paires de rayons (5a, 5b) se croisant l'un avec l'autre, **caractérisée en ce qu'**un palier conforme à une ou à plusieurs des revendications précédentes qui est monté au niveau du point de croisement d'une ou de plusieurs des dites paires de rayons (5a, 5b).
